Europäisches Patentamt

European Patent Office

Office européen des brevets

(11) Publication number: 0 438 035 A2

# EUROPEAN PATENT APPLICATION

(21) Application number: 90830568.3

(22) Date of filing: 05.12.90

(51) Int. Cl.5: H04M 11/02

(30) Priority: 19.01.90 IT 1910090

(43) Date of publication of application:
24.07.91 Bulletin 91/30

(84) Designated Contracting States:
BE CH DE ES FR GB LI NL SE

(71) Applicant: Merlo, Giuseppe
Via Leon Battista Alberti, 5
I-20149 Milano(IT)

(72) Inventor: Merlo, Giuseppe
Via Leon Battista Alberti, 5
I-20149 Milano(IT)

(74) Representative: Cicogna, Franco
Ufficio Internazionale Brevetti Dott.Prof.
Franco Cicogna Via Visconti di Modrone,
14/A
I-20122 Milano(IT)

(54) Microprocessor-controlled doorkeeper lodge system intercoupling at least a door-keeper lodge with one or more coded-access apartments.

(57) A microprocessor-controlled door-keeper lodge system comprises a door-keeper lodge system main circuit and single apartment peripheral circuits, the door-keeper lodge system circuit including a microprocessor interfaced with at least an interphone of the door-keeper lodge, a door-keeper lodge keyboard and display, the microprocessor being oper- atively inter-coupled with the individual apartment peripheral circuits in order to selectively cause the door-keeper lodge system interphone to communicate with an apartment interphone as on the keyboard there is formed an alphanumeric code individually related with each single apartment peripheral circuit.

FIG.1

# MICROPROCESSOR-CONTROLLED DOOR-KEEPER LODGE SYSTEM INTERCOUPLING AT LEAST A DOOR-KEEPER LODGE WITH ONE OR MORE CODED-ACCESS APARTMENTS

## BACKGROUND OF THE INVENTION

The present invention relates to a microprocessor-controlled door-keeper lodge system inter-coupling at least a door-keeper lodge with one or more coded-access apartments, for transmitting between the door-keeper lodge and the individual apartments acoustical signals for communicating the individual apartments with the door-keeper lodge either individually or in a conference mode.

There are already known electronic door-keeper lodge systems which greatly simplify the electrical connections between the door-keeper lodge interphone system and the individual interphones of the single apartments.

There are also known so-called "personalized" door-keeper lodge systems which, however, are very complex construction wise.

One drawback of known door-keeper lodge systems, both of a conventional and of an electronic type, is that these system are not provided for absolutely preserving the reserverdness of the tenants of the single apartments.

In order to meet this reservedness requirement it is also known, instead of indicating the name of the tenant at the door-keeper lodge interphone system, to provide for the use of numeric indications which form a sort of code for identifying the apartment tenant.

This identifying system, however, is affected by several drawbacks, the main of which is that each time a push-button is pressed at the door-system lodge interphone system, even if the key is not specifically indicative of the name of a particular tenant, the buzzer in the apartment corresponding to the pressed key is always energized even if the person who has pressed the key does not know the name of the tenant.

## SUMMARY OF THE INVENTIOON

Accordingly, the main object of the present invention is to overcome the above mentioned drawbacks of known door-keeper lodge systems by providing an electronic type of microprocessor-controlled door-keeper lodge system which is adapted for intercoupling at least a door-keeper lodge with one or more coded access apartments so as to provide absolute reservedness features.

Another object of the present invention is to provide such an electronic door-keeper lodge system in which for each tenant there are available a pluraliti of access names/codes.

Another object of the present invention is to provide such a door-keeper lodge system in which each tenant has the possibility of easily changing, at any desired times, his/her access code, by using a simple key either of an electronic or of a mechanical type.

Yet another object of the present invention is to provide such a door-keeper lodge system which is specifically adapted to communicate the door-keeper lodge and the individual apartments, either with an individual communication mode of operation or with a conference communication mode of operation.

Yet another object of the present invention is to provide such a door-keeper lodge system which comprises automatic signalling means for signalling possible other persons which have required the communication line with the single apartments, in the case in which all the communicating lines are occupied, and for talking with the same advised apartment or for talking with other apartments.

Yet another object of the present invention is to provide such a door-keeper lodge system which comprises means for providing each single tenant with the possibility of releasing messages which can appear on display means arranged at the door keeper lodge.

Yet another object of the present invention is to provide such a door-keeper lodge system which also provides a visitor with the possibility of releasing messages to the single apartment tenants.

Yet another object of the present invention is to provide such an electronic door-keeper lodge system, controlled by a microprocessor, which is very reliable in operation and which, in particular, comprises buffer batteries so as to operate also in a mains malfunction condition.

According to one aspect of the present invention, the above mentioned objects, as well as yet other objects, which will become more apparent hereinafter, are achieved by a microprocessor-controlled door-keepr lodge system intercoupling at least a door-keeper lodge with one or more coded-access apartments having the features of the characterizing portion of claim 1.

Additional advantageous features of the present invention are as follows:

1) an absolute reservedness, since the names of the single tenants are not accessible at the door-keeper lodge, said names being stored in a dedicated memory;

2) only the person knowing a tenant name, or other access code, can access the apartment interphone;

3) the calling party at the door-keeper lodge is not compelled to read a list of names for searching a desired tenant name which must be simply set on a lodge keyboard in order to establish the call;

4) as a name of a tenant must be changed, this can be made by simply writing the new tenant name in the dedicated memory.

Further characteristics of the system according to the invention are stated in the depending claims.

## BRIEF DESCRIPTION OG THE DRAWINGS

Further advantages of the electronic microprocessor-controlled door-keeper lodge system inter-coupling at least a door-keeper lodge with one or more coded-access apartments according to the present invention will become more apparent from the following detailed description of some preferred embodiments thereof which are illustrated, by way of an indicative but not limitative example, in the accompanying drawings, where:

Figures 1 and 2 illustrate two possible schematic block diagrams of two embodiments of the electronic door-keeper lodge system according to the invention, which has been designed for one or more apartments; and

Figure 3 shows another schematic block diagram of a further embodiment of the invention, the operation possibility of which have been extended with respect to the embodiments shown in figures 1 and 2.

## DESCRIPTION OF THE PREFERRED EMBODIMENTS

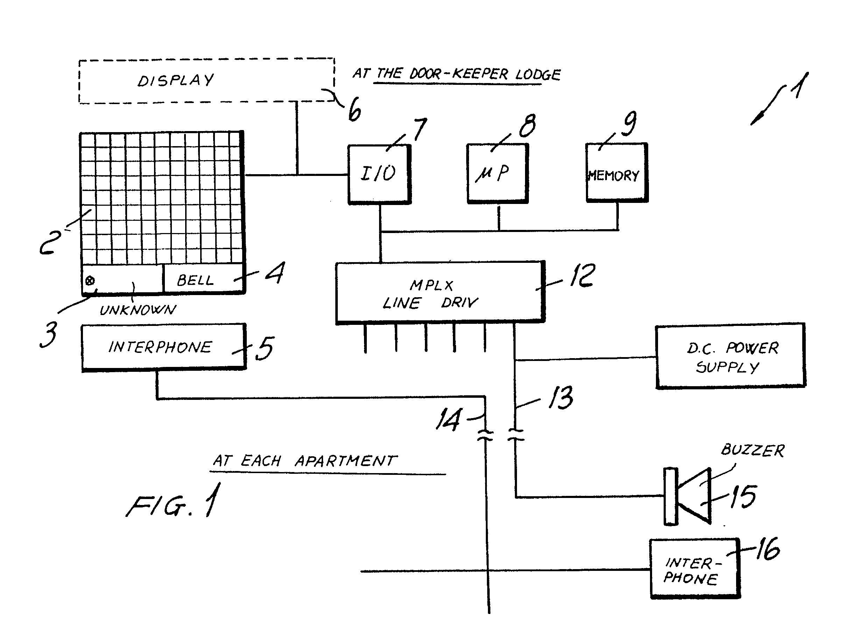

With reference to the figures of the accompanying drawings, and, more specifically, to figure 1, is herein shown a schematic block diagram of a possible embodiment of a microprocessor-controlled door-keeper lodge system according to the invention, which has been overally indicated at the reference number 1.

As shown, the system according to the invention comprises a door-keeper lodge circuit, shown at the top portion of figure 1, and an apartment circuitry shown, for each apartment, at the bottom portion of figure 1.

The door-keeper lodge circuit comprises, more specifically, and according to the present invention, a keyboard 2 including a set plurality of keys, a device 3 for indicating "unknown tenant" and a respective main bell 4.

The door-keeper lodge circuitry comprises interphone means 5 and moreover display means 6, interface means I/O 7, as well as one or more microprocessor means 8 and memory means 9.

This circuitry further comprises, in the embodiment being disclosed, a multiplexing bloc 12, the output lines of which are coupled to the individual apartments. More specifically, of the several output lines of the multiplexing bloc 12 there has been exclusively indicated only the line intercoupled to a generic apartment. The other wire which interconnects with the mentioned generic apartment is the wire 14 which leads to the interphone means 5. The apartment circuitry, in this very simple embodiment, exclusively comprises a conventional buzzer 15 and an apartment interphone set 16.

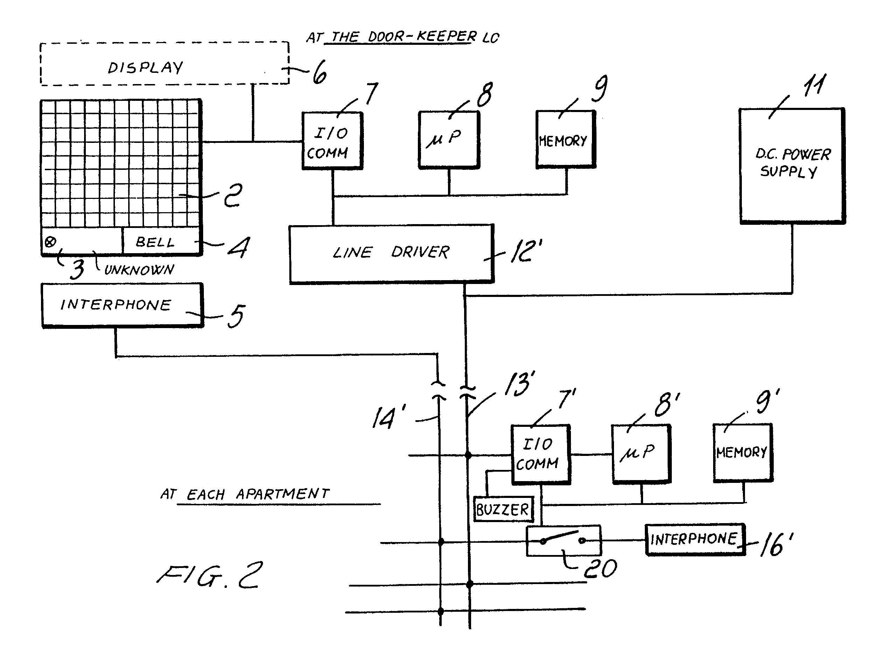

With reference to figure 2, is herein shown another possible embodiment of the system according to the invention, which is designed for providing a higher performance. Even in this embodiment, the door-keeper lodge circuitry comprises a door-keeper lodge keyboard 2, with display means 3 for indicating "an unknown tenant" and a bell 4, the interphone means 5, the display means 6 and the interface I/O 7, the microprocessor means 8 and memory means 9. As is shown, this circuitry further comprises a power supply bloc 11 and a line driver bloc 12'.

The apartment circuitry, differently from the first embodiment, also comprises dedicated microproccessor means 8' which interface with the door-keeper lodge system line 13', 14' through the interface I/O 7', dedicated memories being associated with said apartment microprocessor means 8'.

The apartment interphone 16' in particular, can be selectively switched on through on-off switching means 20.

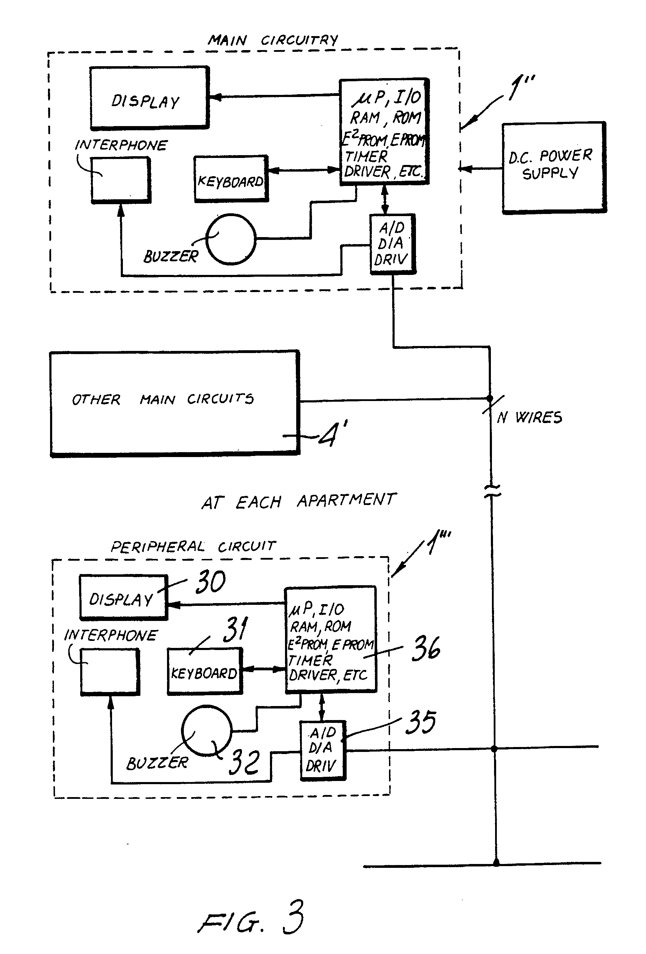

Moreover, with reference to figure 3, is herein shown another block diagram of a third possible embodiment of the electronic door-keeper lodge system according to the invention, this embodiment being provided for very high performance.

Even in this embodiment, the system comprises a door-keeper lodge system main circuitry, indicated overally at the reference number 1", and an apartment circuitry portion, overally indicated at the reference number 1'".

As is shown, both the apartment circuitry and the door-keeper lodge circuitry of this embodiment are slightly more complex than those of the preceding embodiment, since the door-keeper lodge circuitry further comprises timing means, driving means, A/D converting means and D/A converting means, as well as other main circuits, overally indicated by the reference block 4'.

In turn, the apartment circuitry 1'", also having a slightly more complex configuration, includes apartment display means 30, apartment keyboard means 31, an apartment buzzer 32, A/D and D/A converting means 35, as well as, in the microprocessor bloc 36, memory means and timing means, driving means and so on.

The operation of the three embodiments above disclosed will be clearly illustrated thereinafter.

More specifically, a visitor, in order to access each individual apartment, must set on the keyboard 2, for example, the tenant name/code and must press, after having set this name/code, a predetermined key of the keyboard 2.

Thus, the set name/code will be compared with the names/codes stored in the memory means (of the main circuitry of the door-keeper lodge and/or in the apartment peripheral circuit).

If the code is recognized, then the connection with the apartment tenant will be actuated.

The bell will ring and the sound will be also transmitted to the interphone means 5 arranged at the door-keeper lodge.

After a given number of seconds, if the name/code does not exist, then on the door-keeper lodge display means 3 will appear the word "UNKNOWN".

This procedure will be also valid for a voice communication from an apartment to another apartment.

In particular, after having set the connection, each interested party can press, for example, a further push-button or key of the above mentioned type and digit a further name/code in order to connect with a third apartment and so on.

In this case, it is provided that the connection will be automatically interrupted as all the talking parties, with the exception of the party at the door-keepr lodge, have released the interphone or as there is no talking for a given time.

Of course, the system according to the invention can also be designed for coupling several door-keeper lodges, and in this case, several main circuits should be provided.

As shown in the simple embodiment of figure 1, exclusively a set of talkers at a time can actually talk.

In the other embodiments, on the contrary, several contemporaneous talkings can occur. With respect to the recognizing code, each tenant can be provided, according to the invention, with several recognizing codes. In order to modify these codes, an electronic key must be set, comprising a predetermined character number, by pressing a further predetermined second key: in this case, on the door-keeper lodge display means will immediately appear the word "CODE 1" followed by the old code. After having set the new code, it will be confirmed, by still using the mentioned second key, in order to pass to "CODE 2" and so on for all of the provided codes, for example 8 or more codes. If the number of the provided codes is 8, then, by further pressing the mentioned second key, on the door-keeper lodge display means 3 will be displayed the words "UPDATED CODES". In connection with the message which can be transmitted, if a name/code is accepted, then, in addition to the ringing of the buzzer associated with the interphone, on the display means 6 will appear a particular word, for example "MESSAGE" or other equivalent word, adapted to inform the visitor about the procedure to leave a message.

The visitor, moreover, can also set a message and, at the end of this message, a signalling for example a blinking signal, will indicate that the message has been either accepted or not.

In the case of an error, the message can also be amended, by successively cancelling-ghe message letters or words, or cancelling the full message, by means of a dedicated key, also arranged on the door-keeper lodge keyboard 2.

Once accepted, the message will be sent to the apartment and will appear on the apartment display means 30.

In a small-cost embodiment, the message can also be stored at the door-keeper lodge storing means and it can be sent to the apartment exclusively if required by the tenant.

In a more sofisticated embodiemnt, on the contrary, the message can be transmitted by voice and stored according to a procedure which will be well known to those skilled in the art, for example on a tape, integrated circuit and so on.

Obviously, each individual tenant can also set given messages to be transmitted to possible visitors, for example a message indicating that the tenant is at that moment impossibilitated to receive.

In this connection it should be apparent that the above disclosed operating mode of the three embodiments of the subject system, will depend on the particular software used for programming the door-keeper lodge microprocessor means and the apartment microprocessor means.

From the above disclosure it should be apparent that the invention fully achieves the intended objects.

While the invention has been disclosed with reference to preferred embodiments thereof, it should be apparent that the disclosed embodiments are susceptible to several modifications and variations all of which will come within the spirit and scope of the appended claims.

**Claims**

1. A microprocessor- controlled door-keeper lodge system intercoupling at least a door-keeper lodge with one or more coded-access apartments, comprising a main door-keeper lodging circuitry and individual apartment peripheral circuits, characterized in that at least said door-keeper lodge main circuitry comprises door-keeper lodge microprocessor means, interfaced with door-keeper lodge interphone means, door-keeper lodge keyboard means and door-keeper lodge display means, which are electrically operatively interconnected with said apartment peripheral circuits, so as to cause said door-keeper lodge interphone means to selectively communicate with interphone means in each said apartment circuits, as on said door-keeper lodge keyboard means is key-formed an alphabetic and/or alphanumeric code which is individually associated with each said apartment peripheral circuit.

2. A system according to Claim 1, characterized in that said door-keeper lodge main circuitry further comprises, electrically operatively interconnected to one another, keyboard means, display means, interphone means, I/O interface means, microprocessor means, memory means and address multiplexing means.

3. A system according to claim 1, characterizedin that each said apartment circuit comprises at least electric bell means and interphone means.

4. A system according to claim 1, characterized in that said door-keeper lodge main circuitry further comprises D.C power supply means.

5. A system according to claim 1, characterized in that each said apartment circuit further comprises, electrically operatively interconnected to one another, I/O interface means, apartment microprocessor means, apartment memory means, apartment interphone means and switch means for selectively connecting said apartment interphone means to a line of said door-keeper lodge main circuitry.

6. A system according to claim 1, characterized in that said door-keeper lodge main circuitry further comprises timing means, electronic driving means and A/D and D/A converter means.

7. A system according to claim 1, characterized in that each said apartment circuit further comprises apartment keyboard means, display means, microprocessor means, interface means, memory means, timing means, A/D converter means and D/A converter means.

FIG. 1

AT THE DOOR-KEEPER LODGE

DISPLAY — 6

I/O — 7  
µP — 8  
MEMORY — 9

MPLX LINE DRIV — 12

UNKNOWN — 3  
BELL — 4  
INTERPHONE — 5

D.C. POWER SUPPLY

BUZZER — 15

INTER-PHONE — 16

AT EACH APARTMENT

13  
14

1  
2

FIG. 2

MAIN CIRCUITRY

DISPLAY

INTERPHONE

KEYBOARD

BUZZER

μP, I/O
RAM, ROM
E²PROM, EPROM
TIMER
DRIVER, ETC.

A/D
D/A
DRIV

D.C. POWER
SUPPLY

1"

OTHER MAIN CIRCUITS

4'

N WIRES

AT EACH APARTMENT

PERIPHERAL CIRCUIT

1‴

DISPLAY    30

INTERPHONE

KEYBOARD    31

BUZZER    32

μP, I/O
RAM, ROM
E²PROM, EPROM
TIMER
DRIVER, ETC    36

A/D
D/A
DRIV    35

FIG. 3